# EUROPÄISCHE PATENTSCHRIFT

(11) **EP 2 428 418 B1**
(45) Veröffentlichungstag und Bekanntmachung des Hinweises auf die Patenterteilung: **03.08.2016**
(21) Anmeldenummer: 11180120.5
(22) Anmeldetag: 06.09.2011
(51) Int. Cl.: B60T 15/48, B60T 17/00

(54) **Luftaufbereitungseinrichtung und Fahrzeug mit einer Luftaufbereitungseinrichtung**
Air preparation device and vehicle with such
Dispositif de traitement de l'air et véhicule doté d'un dispositif de traitement de l'air

(30) Priorität: 09.09.2010 DE 102010044910
(43) Veröffentlichungstag der Anmeldung: 14.03.2012
(73) Patentinhaber: KNORR-BREMSE Systeme für Nutzfahrzeuge GmbH, 80809 München (DE)
(72) Erfinder: Schäbel, Stefan, 80804 München (DE); Eidenschink, Rainer, 81927 München (DE); Wernwag, Lars, 80999 München (DE)
(74) Vertreter: Schönmann, Kurt

(56) Entgegenhaltungen:
- EP-A2- 0 976 636
- EP-A2- 1 714 846
- DE-A1-102006 034 785

## Beschreibung

Die vorliegende Erfindung betrifft eine Luftaufbereitungseinrichtung für ein Fahrzeug, insbesondere für ein Kraftfahrzeug wie ein Nutzfahrzeug, einen Traktor oder ein schienengebundenes Fahrzeug. Die Erfindung betrifft außerdem ein Fahrzeug mit einer Luftaufbereitungseinrichtung.

### Hintergrund der Erfindung

Fahrzeuge, die hohen Belastungen ausgesetzt sind, weisen häufig Druckluftsysteme auf, wie beispielsweise Druckluftbremsen. Um verschiedenen Druckluftsystemen zugeordnete Druckluftkreise wie erste und zweite Bremskreise, Feststellbremseinrichtung, Luftfederung, usw. mit Druckluft versorgen zu können, ist in der Regel eine Luftaufbereitungsanlage vorgesehen. Eine Luftaufbereitungsanlage weist einen Lufttrockner auf, der Luft für die Druckluftkreise trocknet. Dem Lufttrockner wird in der Regel von einem durch den Motor angetriebenen Kompressor Druckluft bereitgestellt. Luft, die im Lufttrockner getrocknet wurde, wird häufig über ein Mehrkreisschutzventil auf die verschiedenen Druckluftkreise verteilt. Der Lufttrockner kann über ein Lufttrocknergehäuse verfügen, in dem Ventile und Strömungseinrichtungen angeordnet sind, und an dem zentral mittig eine Trocknerpatrone mit einer Filterkartusche angebracht ist. Am Lufttrocknergehäuse ist über eine externe Flanschverbindung das Ventilgehäuse des Mehrkreisschutzventils befestigt. Es sind auch Luftaufbereitungsanlagen bekannt, bei denen das Mehrkreisschutzventil und der Lufttrockner in einem gemeinsamen Gehäuse integriert sind, und die somit eine integrierte Luftaufbereitungseinrichtung bilden. Eine derartige Luftaufbereitungseinrichtung ist in der Patentanmeldung EP 0 976 636 A2 offenbart. Eine integrierte Luftaufbereitungseinrichtung erfordert einen erheblichen technischen Aufwand für den Gehäuseguss, da das Gehäuse einer integrierten Luftaufbereitungseinrichtung über erhebliche Ausmaße verfügt und komplexe Ventilanordnungen und Strömungswege sicher aufnehmen muss. Andererseits führt das Verwenden einer externen Flanschverbindung, um ein Lufttrocknergehäuse und das Mehrkreisschutzventil miteinander zu verbinden, zu einem erheblichen Platzbedarf der miteinander verbundenen Komponenten. Darüber hinaus sind häufig noch weitere Komponenten wie Schalldämpfer, Ölabscheider oder Ähnliches mit einer integrierten oder anderen Luftaufbereitungseinrichtung verbunden. Es besteht somit ein Bedarf für eine kompakte Luftaufbereitungseinrichtung, die gleichzeitig einfach und mit geringem technischen Aufwand beim Gießen herzustellen ist.

Diese Aufgabe wird mit den Merkmalen der unabhängigen Ansprüche erfüllt.

Vorteilhafte Ausgestaltungen ergeben sich aus den Merkmalen der abhängigen Ansprüche.

Erfindungsgemäß ist eine Luftaufbereitungseinrichtung für ein Fahrzeug vorgesehen, die einen Lufttrockner mit einem Lufttrocknergehäuse und ein Mehrkreisschutzventil mit einem Ventilgehäuse aufweist. Das Lufttrocknergehäuse und das Ventilgehäuse sind miteinander verbunden. Das Lufttrocknergehäuse weist ein vorstehendes Element auf, welches das Ventilgehäuse zumindest an einer Seite zumindest teilweise übergreift. Somit kann das Ventilgehäuse nahe an dem Lufttrocknergehäuse angebracht sein, wodurch sich Bauraum einsparen lässt. Dies ergibt eine kompakte Konstruktion. Darüber hinaus können Ventilgehäuse und Lufttrocknergehäuse als separate Gehäuse ausgebildet sein, die fest miteinander verbunden sein können. Dies vereinfacht die Herstellung. Ventilgehäuse und/oder Lufttrocknergehäuse können jeweils durch ein Gussverfahren hergestellt sein. Insbesondere können Ventilgehäuse und/oder Lufttrocknergehäuse aus einem Gussmetall hergestellt sein, wie etwa gegossenem Aluminium, Stahl oder einer geeigneten Legierung. Es ist vorstellbar, dass Ventilgehäuse und Lufttrocknergehäuse formschlüssig und/oder kraftschlüssig miteinander verbunden sind. Das Mehrkreisschutzventil kann ein gewöhnliches Mehrkreisschutzventil sein, das zum Verteilen von Druckluft auf verschiedene Druckluftkreise eines Fahrzeugs geeignet ist. Es kann insbesondere ein oder mehrere Überströmventile aufweisen. Für den Lufttrockner können geeignete Ventile und Strömungseinrichtungen für Druckluft vorgesehen sein. Er kann beispielsweise mit einem Kompressor verbindbar sein, der Druckluft zur Verfügung stellt. Es kann vorgesehen sein, dass das Ventilgehäuse zumindest in einer Richtung hinter dem Lufttrocknergehäuse angeordnet ist. Diese Richtung kann eine Anordnungslängsrichtung sein, die insbesondere in einem montierten Zustand der Luftaufbereitungseinrichtung parallel zu einer Fahrzeuglängsrichtung verlaufen kann. Das vorstehende Element des Lufttrocknergehäuses kann insbesondere das Ventilgehäuse derart in der Anordnungslängsrichtung übergreifen, dass es sich in dieser Richtung über das Ventilgehäuse erstreckt. Übergreifen kann bedeuten, dass das vorstehende Element das Ventilgehäuse zumindest teilweise umgreift, wobei das vorstehende Element einen Teil des Ventilgehäuses von zumindest zwei Seiten umgeben kann. Das vorstehende Element kann einen Teil des Ventilgehäuses auch von drei oder mehr als drei Seiten umgeben, um es zu umgreifen. Es kann allerdings auch vorgesehen sein, dass das vorstehende Element das Ventilgehäuse nur an einer Seite übergreift, und es somit übergreift, aber nicht umgibt oder umgreift. Es ist vorstellbar, dass das vorstehende Element einstückig mit dem Lufttrocknergehäuse ausgebildet ist. Vorzugsweise ist das vorstehende Element materialschlüssig mit dem Lufttrocknergehäuse ausgebildet. Der Lufttrockner beziehungsweise das Lufttrocknergehäuse kann eine Oberseite und eine dieser bezüglich des Lufttrocknergehäuses gegenüberliegende Unterseite aufweisen. Die Oberseite kann dadurch definiert sein, dass sie im montierten Zustand von der Fahrbahn wegzeigt. Die Oberseite kann auch durch das vorstehende Element definiert sein. Insbesondere kann vorgesehen sein, dass sich das vorstehende Element in einer Erstreckungsrichtung quer zu beziehungsweise rechtwinklig von einer Seitenfläche des Lufttrocknergehäuses erstreckt, welche die dem Ventilgehäuse zugewandte Seite sein kann. Dabei kann eine äußere Fläche des vorstehenden Elements, deren Flächennormale schräg oder rechtwinklig zur Erstreckungsrichtung des vorstehenden Elements steht, die Oberseite definieren. Die Erstreckungsrichtung und die Anordnungslängsrichtung können zusammenfallen. Es können mehr als ein vorstehendes Element vorgesehen sein, welche das Ventilgehäuse übergreifen. Das Fahrzeug kann insbesondere ein Nutzfahrzeug, Traktor oder Schienenfahrzeug sein.

Eine Trocknerpatrone kann an einer Oberseite des Lufttrocknergehäuses angebracht oder anbringbar sein. Dadurch, dass die Lufttrocknerpatrone an der Oberseite des Lufttrocknergehäuses angebracht ist, können eine sichere Befestigung der Trocknerpatrone und eine gute Zugänglichkeit der Trocknerpatrone gewährleistet werden. Es ist vorstellbar, insbesondere für einen Zustand, in dem die Luftaufbereitungseinrichtung nicht an einem Fahrzeug montiert ist, die Oberseite als diejenige Seite zu definieren, an der die Trocknerpatrone angeordnet oder anordenbar ist.

Es ist zweckmäßig, wenn eine Trocknerpatrone zumindest teilweise an dem vorstehenden Element des Lufttrocknergehäuses angebracht oder anbringbar ist. Somit kann die von dem vorstehenden Element bereitgestellte Oberfläche zum Anbringen der Trocknerpatrone eingesetzt werden, wodurch sich vermeiden lässt, dass getrennte Flächen mit separaten Dichtungseinrichtungen vorgesehen werden müssen. Die Trocknerpatrone kann somit gegenüber einem Schwerpunkt des Lufttrocknergehäuses versetzt angeordnet sein.

Das Lufttrocknergehäuse kann auf einer dem Ventilgehäuse zugewandten Verbindungsseite eine Aufnahme aufweisen, die zumindest einen Teil des Ventilgehäuses aufnimmt. Durch die Aufnahme kann weiterer Platz eingespart werden. Die Aufnahme kann insbesondere zumindest teilweise durch das vorstehende Element des Lufttrockners gebildet sein.

Bei einer Weiterbildung kann das Lufttrocknergehäuse auf einer dem Ventilgehäuse zugewandten Verbindungsseite stufenartig ausgebildet sein. Eine stufenartige Struktur lässt sich einfach herstellen, beispielsweise durch ein Gussverfahren, und bietet eine gute Aufnahmemöglichkeit für das Ventilgehäuse. Ferner werden durch die Stufen gut definierte Kontaktflächen bereitgestellt, welche einerseits das Verbinden beziehungsweise Montieren von Ventilgehäuse und Lufttrocknergehäuse in der gewünschten Stellung erleichtern und andererseits die geschlossene Verbindung stabilisieren. Insbesondere kann dabei das vorstehende Element des Lufttrocknergehäuses stufenartig ausgebildet sein. Es kann zweckmäßig sein, dass sich vom vorstehenden Element eine stufenartige Struktur in Richtung des Lufttrocknergehäuses erstreckt, die bis zu einer bestimmten Tiefe des Gehäuses führt und dann sich zur dem vorstehenden Element gegenüberliegenden Seite wieder stufenartig nach außen fortsetzt. Auf diese Art kann beispielsweise ein zweites vorstehendes Element gebildet sein.

Es ist vorteilhaft, wenn das Ventilgehäuse auf einer dem Lufttrocknergehäuse zugewandten Seite zu der Verbindungsseite komplementär ausgebildet ist. Somit lassen sich Ventilgehäuse und Lufttrocknergehäuse besonders gut und zumindest teilweise formschlüssig aneinander fügen. Insbesondere kann das Ventilgehäuse auf einer dem Lufttrocknergehäuse zugewandten Seite derart stufenartig ausgebildet sein, dass es sich passgenau in eine stufenartige Struktur auf der Verbindungsseite des Lufttrocknergehäuses einfügen lässt.

Vorzugsweise sind Ventilgehäuse und Lufttrocknergehäuse über eine Luftführungseinrichtung verbunden, die es erlaubt, dass Luft zwischen Lufttrockner und Mehrkreisschutzventil strömt. Somit kann getrocknete Luft vom Lufttrocknergehäuse zum Ventilgehäuse geführt werden, oder beispielsweise Regenerationsluft zum Regenerieren des Lufttrockners vom Mehrkreisschutzventil durch den Lufttrockner beziehungsweise die Trocknerpatrone geführt werden.

Insbesondere kann die Luftführungseinrichtung im Wesentlichen vollständig von Ventilgehäuse und Lufttrocknergehäuse umgeben sein. Dadurch wird die Luftführungseinrichtung durch das Gehäuse geschützt und es kann sichergestellt werden, dass nicht etwa Feuchtigkeit von außen in die getrocknete Luft vom Lufttrockner eindringen kann. Des Weiteren ist auf diese Art die Luftführungseinrichtung vor Außeneinwirkung mechanischer Art geschützt. Die Luftführungseinrichtung kann in Ventilgehäuse und Lufttrocknergehäuse eingebettet sein. Sie kann einen Lufttrockneranschluss umfassen, der am Lufttrocknergehäuse vorgesehen ist. Ferner kann ein Mehrkreisventilanschluss vorgesehen sein, der am Ventilgehäuse vorgesehen ist. Zur dichten Verbindung dieser beiden Anschlüsse können eine der mehrere Dichtungsvorrichtungen vorgesehen sein. Es ist vorstellbar, dass zur Luftführung zwischen dem Lufttrockneranschluss und dem Mehrkreisventilanschluss ein Rohr vorgesehen ist. Das Rohr kann zapfenartig von dem Lufttrocknergehäuse und/oder dem Ventilgehäuse vorstehen und in den entsprechenden Anschluss am anderen Gehäuse eingeführt oder einführbar sein. Das Rohr beziehungsweise die Ausrichtung der Luftführungseinrichtung kann die Anordnungslängsrichtung definieren.

Das Ventilgehäuse und das Lufttrocknergehäuse können miteinander verschraubt sein. Auf diese Art kann eine zuverlässige Verbindung zwischen Ventilgehäuse und Lufttrocknergehäuse gewährleistet werden, die einfach zu montieren ist. Des Weiteren ist es auf diese Art und Weise möglich, das Ventilgehäuse und das Lufttrocknergehäuse beispielsweise zu Wartungszwecken leicht voneinander zu trennen. Es kann vorgesehen sein, dass die Verschraubung durch geeignete Maßnahmen gesichert ist, um eine leichte Manipulation von außen zu erschweren. Beispielsweise kann die Verschraubung derart ausgebildet sein, dass spezielle Werkzeuge notwendig sein, um die Verschraubung zu lösen. Die Verschraubung kann zumindest teilweise am Ventilgehäuse freistehend angeordnet sein, um eine leichte Montage zu gewährleisten

Es kann vorgesehen sein, dass das Ventilgehäuse das Lufttrocknergehäuse in mindestens eine Richtung überragt. Die Überragungsrichtung kann dem vorstehenden Element gegenüber liegen. Damit kann eine vorhandene maximale Einbauhöhe gut ausgenutzt werden.

Das Ventilgehäuse kann das Lufttrocknergehäuse in Richtung zur Unterseite des Lufttrockners hin überragen, beispielsweise in Bodenrichtung. Somit können an der Seite des Lufttrocknergehäuses, die von dem Ventilgehäuse überragt wird, eine oder mehrere zusätzliche Komponenten wie beispielsweise ein Schalldämpfer angeordnet sein. Eine solche Konstruktion erfordert nur geringen zusätzlichen Bauraum.

Bei einer Weiterbildung kann eine Schalldämpfereinrichtung vorgesehen sein, die es ermöglicht, den Betriebslärm zu verringern. Die Schalldämpfereinrichtung kann insbesondere dazu dienen, während einer Regeneration des Lufttrockners entstehenden Lärm zu vermindern. Die Schalldämpfereinrichtung kann an der Bodenseite des Lufttrockners angeordnet sein und zumindest teilweise vom Ventilgehäuse überdeckt sein.

Vorzugsweise weist das Mehrkreisschutzventil mehrere Druckluftanschlüsse für Druckluftkreise eines Fahrzeugs auf, die in eine gemeinsame Richtung ausgerichtet sind. Somit kann ein guter und einheitlicher Zugang zu den Druckluftanschlüssen gewährleistet werden.

Bei einer Weiterbildung kann vorgesehen sein, dass die Druckluftanschlüsse für Druckluftkreise des Mehrkreisschutzventils in eine Richtung ausgerichtet sind, die vom Fahrzeug weg zeigt. Dies ermöglicht einen direkten Zugang eines Benutzers zu diesen Druckluftanschlüssen.

Der Lufttrockner kann mehrere Druckluftanschlüsse aufweisen, die in die gleiche Richtung ausgerichtet sind, wie die Druckluftanschlüsse für Druckluftkreise des Mehrkreisschutzventils. Somit können möglichst viele, vorzugsweise alle, Druckluftanschlüsse der Luftaufbereitungseinrichtung in eine gemeinsame Richtung zeigen, die vorzugswiese in montierten Zustand vom Fahrzeug weg gerichtet ist beziehungsweise zur Fahrzeugseite zeigt.

Die vorliegende Erfindung betrifft außerdem ein Fahrzeug mit einer Luftaufbereitungseinrichtung wie oben beschrieben. Das Fahrzeug kann ein Nutzfahrzeug, Traktor oder Schienenfahrzeug sein.

Es kann vorgesehen sein, dass eine Luftaufbereitungseinrichtung, wie sie oben beschrieben wird, gemäß einem bestimmten Montageverfahren zusammengebaut wird. Gemäß diesem Verfahren können ein Lufttrockner mit einem Lufttrocknergehäuse sowie ein Mehrkreisschutzventil mit einem Ventilgehäuse bereitgestellt werden. Das Lufttrocknergehäuse und das Ventilgehäuse können miteinander verbunden werden, etwa durch eine Verschraubung. Das Ventilgehäuse und das Lufttrocknergehäuse können dabei derart miteinander verbunden werden, dass ein vorstehendes Element des Lufttrocknergehäuses das Ventilgehäuse zumindest an einer Seite zumindest teilweise übergreift. Es kann vorgesehen sein, dass an der oberen Seite des Lufttrockners eine Trocknerpatrone angeordnet wird. Die Lufttrocknerpatrone kann dabei derart mit dem Lufttrockner verbunden werden, dass eine Druckluftströmung zwischen Trocknerpatrone und Lufttrockner möglich ist. Es kann vorgesehen sein, dass das Lufttrocknergehäuse und das Ventilgehäuse passgenau miteinander verbunden werden, etwa indem eine stufenartige Struktur des Ventilgehäuses in eine passende stufenartige Struktur des Lufttrocknergehäuses eingefügt wird. Vorzugsweise wird über eine Luftführungseinrichtung eine Verbindung zwischen Ventilgehäuse und Lufttrocknergehäuse hergestellt, die es Luft erlaubt, zwischen Lufttrockner und Mehrkreisschutzventil zu strömen. Eine Schalldämpfereinrichtung kann am Lufttrocknergehäuse angeordnet werden. Insbesondere kann der Schalldämpfer an einer Unterseite beziehungsweise einer dem vorstehenden Element beziehungsweise der Trocknerpatrone gegenüberliegenden Seite des Lufttrocknergehäuses angebracht werden.

Die Erfindung wird nun mit Bezug auf die begleitenden Zeichnungen anhand besonders bevorzugter Ausführungsformen beispielhaft erläutert. Dabei werden für funktional oder strukturell gleiche Komponenten identische Bezugszeichen verwendet.

Es zeigen:
- Figur 1: eine schematische Ansicht einer Luftaufbereitungseinrichtung;
- Figuren 2a bis 2c: verschiedene Ansichten einer Variante einer Luftaufbereitungseinrichtung;
- Figuren 3a und 3b: eine weitere Variante einer Luftaufbereitungseinrichtung mit einem Druckminderungsventil;
- Figuren 4a und 4b: noch eine Variante einer Luftaufbereitungseinrichtung mit einem Ölabscheider.

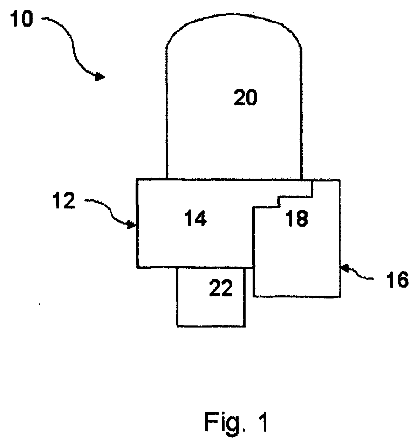

Figur 1 zeigt schematisch eine Luftaufbereitungseinrichtung 10, wie sie für ein Fahrzeug Verwendung finden kann. Die Luftaufbereitungseinrichtung 10 weist einen Lufttrockner 12 mit einem Lufttrocknergehäuse 14 auf. Ferner umfasst die Luftaufbereitungseinrichtung ein Mehrkreisschutzventil 16 mit einem Ventilgehäuse 18. Das Ventilgehäuse 18 und das Lufttrocknergehäuse 14 sind separat voneinander ausgebildet, aber fest miteinander verbunden. Das Lufttrocknergehäuse 14 weist ein vorstehendes oder vorspringendes Element auf, welches das Ventilgehäuse 18 teilweise übergreift. Das vorstehende Element ist in diesem Beispiel stufenartig ausgebildet und steht mit einer entsprechenden, komplementär ausgebildeten stufenartigen Struktur des Ventilgehäuses 18 in Berührung. Es ist auch vorstellbar, dass das vorstehende Element derart ausgebildet ist, dass es das Ventilgehäuse 18 vollständig übergreift. Dann würde das vorstehende Element sich bis zur dem Lufttrocknergehäuse 14 abgewandten Seite des Ventilgehäuses 18 erstrecken, also in Figur 1 der rechten Seite des Ventilgehäuses 18. Das vorstehende Element kann sogar an seinem Ende mit einer Abwinklung versehen sein, beispielsweise mit einem nach unten gerichteten Element, um das Ventilgehäuse 18 zu umgreifen. Die Luftaufbereitungseinrichtung 10 umfasst ferner eine Trocknerpatrone 20, die auf dem Lufttrocknergehäuse 14 aufsitzt. Zwischen dem Lufttrockner 12 und der Trocknerpatrone 20 ist eine Luftströmung sowohl vom Lufttrockner 12 zur Trocknerpatrone 20 als auch von der Trocknerpatrone 20 zum Lufttrockner 12 hin möglich. Ebenso ist eine Luftströmung zwischen Lufttrockner 12 und Mehrkreisschutzventil 16 möglich. An der Unterseite des Lufttrocknergehäuses 14 ist ein Schalldämpfer 22 vorgesehen. Vorzugsweise ist eine Luftführung derart vorgesehen, dass Regenerationsluft, die vom Mehrkreisschutzventil 16 zum Lufttrockner 12 strömt, über den Schalldämpfer 22 in den Außenbereich gelangen kann. Es ist zu erkennen, dass die Trocknerpatrone 20 gegenüber einer Mitte oder einem Schwerpunkt des Lufttrockners 12 beziehungsweise des Lufttrocknergehäuses 14 versetzt angeordnet ist. In diesem Beispiel sitzt die Trocknerpatrone 20 teilweise auf dem vorstehenden Element des Lufttrocknergehäuses 14 auf, so dass die Lufttrocknerpatrone 20 vollständig auf dem Lufttrocknergehäuse 14 aufsitzt, nicht aber auf dem Ventilgehäuse 18.

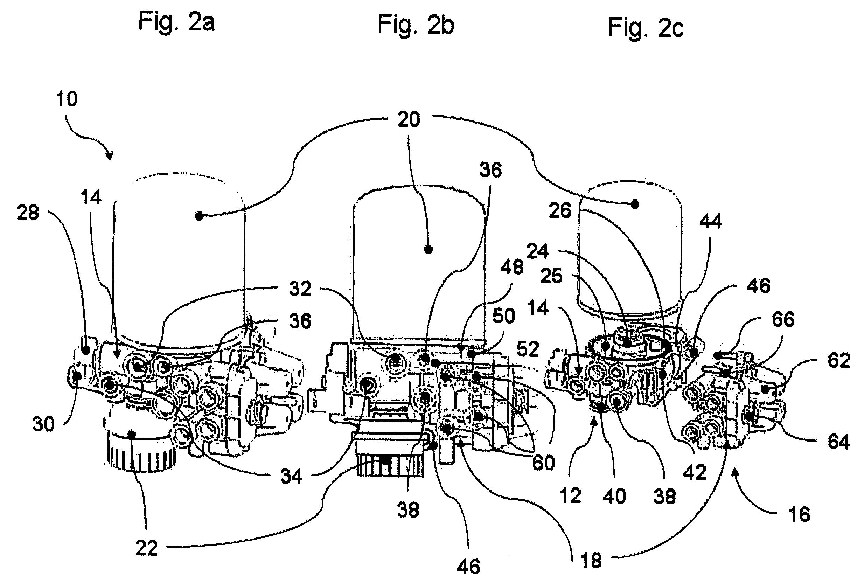

Figuren 2a bis 2c zeigen verschiedene Ansichten einer Luftaufbereitungseinrichtung 10 in größerem Detail. Figur 2a zeigt eine Ansicht der Luftaufbereitungseinrichtung 10 schräg von oben, Figur 2b eine Ansicht von vorne, wie sie einem Fahrer erscheinen würde, wenn die Luftaufbereitungseinrichtung 10 an einem Fahrzeug befestigt ist. Figur 2c schließlich zeigt eine Explosionszeichnung einzelner Komponenten der Luftaufbereitungseinrichtung 10. Aus Gründen der Übersichtlichkeit sind nicht alle Bezugszeichen in allen Figuren eingetragen. Der Lufttrockner 12 der Luftaufbereitungseinrichtung 10 umfasst ein Lufttrocknergehäuse 14. Im Lufttrocknergehäuse 14 aufgenommen ist ein Patronenhals 24, auf den die Lufttrocknerpatrone 20 aufgeschraubt werden kann. Dazu steht der Patronenhals 24 leicht aus einer oberen Öffnung 25 des Lufttrocknergehäuses 14 hervor. Die Öffnung 25 ist von einer Dichtungseinrichtung 26 umgeben. Druckluft kann zwischen der Dichtungseinrichtung 26 und dem Patronenhals in die Trocknerpatrone 20 einströmen und durch den Patronenhals von der Trocknerpatrone 20 getrocknet in das Lufttrocknergehäuse 14 beziehungsweise den Lufttrockner 12 zurückströmen. Das Lufttrocknergehäuse 14 weist einen externen Befüllungsanschluss 28 auf, über den auch Reifen befüllt werden können. Dieser Anschluss 28 kann somit in beide Richtungen betrieben werden. Insbesondere lassen sich über den externen Befüllungsanschluss 28 auch ohne laufenden Motor durch eine externe Druckluftquelle die Druckluftsysteme eines Fahrzeugs über die Luftaufbereitungsanlage 10 mit Druckluft versorgen beziehungsweise befüllen. Ferner ist ein Heizungsanschluss 30 vorgesehen, der unterhalb des externen Anschlusses 28 angeordnet ist. Über den Heizungsanschluss 30 lässt sich eine Heizung des Lufttrockners 12 betreiben, durch die insbesondere ein nicht zu erkennendes Ablassventil bei kalten Temperaturen derart vorgewärmt werden kann, dass sich keine Vereisung durch gefrierendes Kondensat ergibt. Der Heizungsanschluss 30 kann ein elektrischer Anschluss zum Versorgen einer Heizung des Lufttrockners 12 sein oder ein Warmluftanschluss, über den schon erwärmte Luft zugeführt werden kann. Weiterhin weist der Lufttrockner 12 einen Kompressoreingangsanschluss 32 auf, der mit einem Kompressor eines Fahrzeugs verbunden werden kann, welcher der Luftaufbereitungseinrichtung 10 Druckluft zuführt. Es ist ein Kompressorsteueranschluss 34 vorgesehen, über den ein Druckluft-Steuersignal an den Kompressor weitergegeben werden kann. Über dieses Signal kann dem Kompressor beispielsweise signalisiert werden, dass eine Regeneration durchgeführt wird und er während der Regenerationsphase keine Druckluft zum Lufttrockner führen soll. Über einen Regenerationstankanschluss 36 kann ein externer Regenerationstank angeschlossen werden. Somit ist es möglich, einen speziellen Tank vorzusehen, der Druckluft für eine Regeneration der Trocknerpatrone 20 beziehungsweise einer darin befindlichen Filterkartusche bereitstellt. Alternativ kann eine Regeneration auch durch Druckluft aus einem der Druckluftkreise des Fahrzeugs durchgeführt werden, die dann über das Mehrkreisschutzventil 16 in den Lufttrockner 12 beziehungsweise die Trocknerpatrone 20 strömt. Ferner kann der Lufttrockner 12 noch einen weiteren Anschluss für externe Verbraucher 38 aufweisen. Der Kompressoreingangsanschluss 32, der Kompressorsteueranschluss 34, der Regenerationstankanschluss 36 sowie der Anschluss für externe Verbraucher 38 sind alle an der gleichen Seite des Lufttrockners 12 angeordnet. An einer unteren Seite des Lufttrockners 12 ist ein Schalldämpfer 22 vorgesehen. Der Schalldämpfer 22 liegt bezüglich des Lufttrocknergehäuses 14 der Trocknerpatrone 20 gegenüber. Zum Anschluss des Schalldämpfers ist ein Schalldämpferanschluss 40 vorgesehen. Im Lufttrocknergehäuse 14 sind geeignete Ventilvorrichtungen und Strömungswege angeordnet, um die genannten Anschlüsse und vorgesehenen Komponenten operativ miteinander zu verbinden. Es können auch elektrische Leitungsanschlüsse, elektrische Leitungen und/oder weitere Druckluftanschlüsse vorgesehen sein. Ferner ist am Lufttrockner 12 ein Lufttrockneranschluss 42 vorgesehen. Darüber hinaus sind am Lufttrockner Schraubenaufnahmen 44 ausgebildet, die dazu geeignet sind, am Ventilgehäuse 18 vorgesehene Schrauben aufzunehmen. Am Lufttrocknergehäuse 14 sind Befestigungsaugen 46 vorgesehen, vermittels derer das Lufttrocknergehäuse 14 und somit die Luftaufbereitungseinrichtung 10 mit einem Fahrzeug, insbesondere mit einem Fahrzeugrahmen, fest verbunden werden kann. Die Befestigungsaugen 46 können beispielsweise zu einem Dreiecksflansch mit mindestens drei Befestigungsaugen gehören. Zum Befestigen kann beispielsweise eine Verschraubung verwendet werden. Wie man in den Figuren 2b und 2c erkennen kann, ist das Lufttrocknergehäuse 14 derart ausgebildet, dass es ein vorstehendes Element 48 aufweist. Das vorstehende Element 48 steht von der auf der der Trocknerpatrone 20 zugewandten Verbindungsseite des Lufttrocknergehäuses 14 vor. Seine Außenfläche definiert die Oberseite des Lufttrocknergehäuses 14. Das vorstehende Element 48 ist derart ausgebildet, dass es ermöglicht, dass die Trocknerpatrone 20 mit ihrem Umfang vollständig auf der Oberseite des Lufttrocknergehäuses 14 aufgesetzt ist beziehungsweise aufgesetzt werden kann. Insbesondere nimmt diese Oberseite des Lufttrocknergehäuses 14 die Dichtungseinrichtung 26 vollständig auf. Das Lufttrocknergehäuse 14 ist derart ausgebildet, dass sich auf der dem Ventilgehäuse 18 zugewanderten Seite eine stufenartige Struktur ergibt, die in diesem Beispiel zwei Stufen 50 und 52 aufweist. Diese Stufen bilden eine Aufnahme für das Ventilgehäuse 18. In diesem Beispiel ist nur an der Oberseite des Lufttrocknergehäuses 14 ein vorstehendes Element vorgesehen, d.h. die Aufnahme ist an der Unterseite nicht geschlossen. Es ist jedoch vorstellbar, dass das Lufttrocknergehäuse 14 das Ventilgehäuse 18 mit zwei oder mehr vorstehenden Elementen beziehungsweise Stufenstrukturen übergreift. Jeweils zwei derartiger Stufenstrukturen oder vorstehender Elemente können sich paarweise bezüglich des Ventilgehäuses 18 gegenüberliegen, beziehungsweise an gegenüberliegenden Seiten des Lufttrocknergehäuses 14 ausgebildet sein, etwa an der Oberseite und and der Unterseite. Es ist auch vorstellbar, dass auch das Ventilgehäuse 18 ein oder mehrere vorstehende Elemente aufweist, welche das Lufttrocknergehäuse 14 zumindest teilweise übergreifen. Beispielsweise kann vorgesehen sein, dass ein vorstehendes Element des Ventilgehäuses 18, das stufenartig ausgebildet sein kann, das Lufttrocknergehäuse 14 an dessen Unterseite und/oder an einer seiner Querseiten zumindest teilweise übergreift.
Das Ventilgehäuse 18 weist in diesem Beispiel vier Druckluftanschlüsse 60 für Druckluftkreise eines Fahrzeugs auf, die in die gleiche Richtung ausgerichtet sind wie die Anschlüsse 32, 34, 36 und 38 des Lufttrockners 12. Auf seiner dem Lufttrocknergehäuse 14 zugewandten Seite ist das Ventilgehäuse 18 zu dem Lufttrocknergehäuse 14 komplementär ausgebildet, so dass es passgenau in die Aufnahme des Lufttrocknergehäuses 14 aufgenommen ist (siehe insbesondere Figur 2b). So weist das Ventilgehäuse 18 zu den Stufen 50 und 52 komplementäre Stufen auf. Auf der dem Lufttrockner 12 abgewandten Seite ist am Ventilgehäuse 18 in diesem Beispiel ein Deckel mit vier Halterungen 62 für Federn der Überströmventile vorgesehen. Die zugehörigen Überströmventile sind innerhalb des Ventilgehäuses 18 vorgesehen. Es ist vorstellbar, die Halterungen 62 separat auszubilden. Als Federhalterungen 62 können in diesem Fall Kappen vorgesehen sein, die mit dem Ventilgehäuse 18 verschraubt sein können. Ein Drucksensor 64 kann am Ventilgehäuse 18 vorgesehen sein, um beispielsweise einen Druck innerhalb des Mehrkreisschutzventils 16 zu bestimmen. Am Ventilgehäuse 18 können zwei oder mehr Schraubeneinrichtungen 66 vorgesehen sein, die mit den Schraubenaufnahmen 46 zusammenwirken können, um das Lufttrocknergehäuse 14 und das Ventilgehäuse 18 fest miteinander zu verbinden. Bei der gezeigten Variante ist eine nicht erkennbare dritte Schraubeneinrichtung vorgesehen, die in den Ansichten von den Federhalterungen 62 verdeckt ist. Das Ventilgehäuse 18 weist einen nicht gezeigten Mehrkreisventilanschluss auf, der im montierten Zustand mit dem Lufttrockneranschluss 42 in Fluidkommunikation steht. Es kann eine Dichteinrichtung zum Abdichten des Lufttrockneranschlusses 42 und des Mehrkreisventilanschlusses vorgesehen sein. Vermittels des Mehrkreisventilanschlusses und des Lufttrockneranschlusses 42 wird eine Luftführung geboten, die es ermöglicht, dass Druckluft vom Lufttrockner 12 zum Mehrkreisschutzventil 16 oder in umgekehrter Richtung strömen kann. Eine Rückströmung von Luft vom Mehrkreisschutzventil 16 zum Lufttrockner 12 kann beispielsweise während einer Regeneration wünschenswert sein. Wie man erkennt, ist die Luftführung im montierten Zustand von dem Lufttrocknergehäuse 14 und dem Ventilgehäuse 18 im Wesentlichen vollständig umgeben. Die Luftführung ist im Ventilgehäuse 18 und Lufttrocknergehäuse 14 eingebettet. Wie man erkennt, ragt das Ventilgehäuse 18 in der der Trocknerpatrone 20 gegenüberliegenden Richtung über das Lufttrocknergehäuse 20 hinaus, also in diesem Fall nach unten. Dadurch ergibt sich ein Raum, in dem der Schalldämpfer 22 am Lufttrockner 12 angebracht ist, ohne dass dieser besonders weit über die durch die Höhe des Ventilgehäuses 18 vorgegebene Ausdehnung vorsteht. Somit ergibt sich eine besonders kompakte Anordnung von Lufttrockner 12 und Mehrkreisschutzventil 16, an der ebenfalls besonders platzsparend die Trocknerpatrone 20 und der Schalldämpfer 22 befestigt sein können.

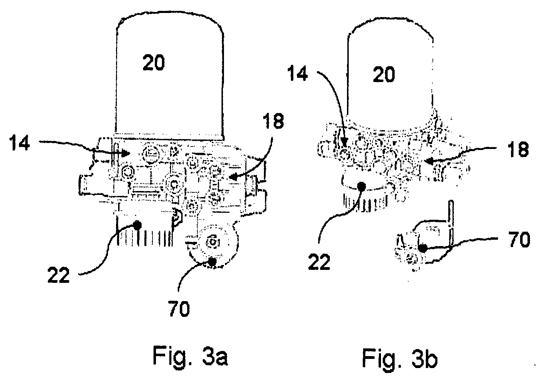

Figuren 3a und 3b zeigen eine weitere Variante einer Luftaufbereitungseinrichtung 10, die weitgehend der in den Figuren 2a bis 2c gezeigten entspricht. In dieser Variante ist jedoch ein zusätzliches Druckminderungsventil 70 vorgesehen. Das Druckminderungsventil 70 ist an der Unterseite des Ventilgehäuses 18 angeordnet, insbesondere auf der dem Lufttrockner 20 gegenüberliegenden Seite des Ventilgehäuses 18. Wie man erkennt, steht das Druckminderungsventil 70 nach unten kaum über den Schalldämpfer 22 hervor. Somit bleibt auch unter Verwendung eines Druckminderungsventils 70 die Luftaufbereitungseinrichtung 10 besonders kompakt und nutzt einen vorhandenen Bauraum an einem Fahrzeug besonders effizient aus.

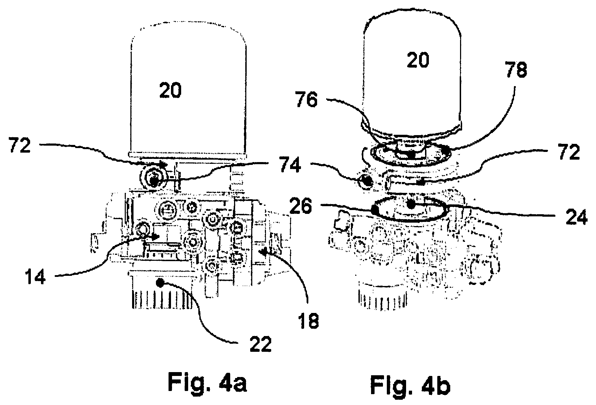

Figuren 4a und 4b zeigen eine weitere Variante der Luftbereitungseinrichtung 10, wie sie in den Figuren 2a bis 2c gezeigt ist. Es ist ein zusätzlicher Ölabscheider 72 vorgesehen. Der Ölabscheider 72 ist an der dem Lufttrockner 20 zugewandten Seite des Lufttrocknergehäuses 14 angeordnet und auf den Patronenhals 24 aufgesetzt.

Der Ölabscheider 72 ist auf bekannte Art dazu ausgebildet, Öl aus vom Kompressor zugeführter Luft abzuscheiden. An der der Trocknerpatrone 20 zugewandten Seite des Ölabscheiders 72 ist ein Ölabscheiderhals 76 vorgesehen, auf den die Trocknerpatrone 20 aufgesetzt beziehungsweise aufgeschraubt werden kann. Zur Abdichtung zwischen dem Ölabscheider 72 und der Trocknerpatrone 20 ist eine Ölabscheiderdichtungseinrichtung 78 vorgesehen. Ferner ist am Ölabscheider 72 ein Ölabscheideranschluss 74 vorhanden, durch den beispielsweise Druckluft zugeführt oder Öl abgeführt werden kann. Der Ölabscheider 72 verfügt über geeignete Filter und/oder Ölabtropfeinrichtungen, um Öl aus der zugeführten Luft zu entfernen. Es ist insbesondere Vorgesehen, dass von dem Lufttrockner 12 zur Trocknerpatrone 20 strömende Luft durch den Ölabscheider 72 gefiltert wird, bevor sie in tatsächlich in die Trocknerpatrone 20 einströmt, um dort getrocknet zu werden. Es versteht sich, dass die in Figuren 4a und 4b gezeigte Variante mit einem Druckminderungsventil 70 ausgestattet werden kann, wie es in Figuren 3a und 3b gezeigt ist.

### Bezugszeichenliste

- 10: Luftaufbereitungseinrichtung
- 12: Lufttrockner
- 14: Lufttrocknergehäuse
- 16: Mehrkreisschutzventil
- 18: Ventilgehäuse
- 20: Trocknerpatrone
- 22: Schalldämpfer
- 24: Patronenhals
- 25: Lufttrockneröffnung
- 26: Dichtungseinrichtung
- 28: externer Befüllanschluss
- 30: Heizungsanschluss
- 32: Kompressoreingangsanschluss
- 34: Kompressorsteueranschluss
- 36: Regenerationstankanschluss
- 38: Anschluss für externe Verbraucher
- 40: Schalldämpferanschluss
- 42: Lufttrockneranschluss
- 44: Schraubenaufnahme
- 46: Befestigungsauge
- 48: vorstehendes Element
- 50: Stufe
- 52: Stufe
- 60: Druckluftkreisanschluss
- 62: Federhalterung
- 64: Drucksensor
- 66: Schraubeinrichtung
- 70: Druckminderungsventil
- 72: Ölabscheider
- 74: Ölabscheideranschluss
- 76: Ölabscheiderhals
- 78: Ölabscheiderdichtungseinrichtung

## Patentansprüche

1. Luftaufbereitungseinrichtung (10) für ein Fahrzeug, mit:
einem Lufttrockner (12) mit einem Lufttrocknergehäuse (14),
einem Mehrkreisschutzventil (16) mit einem Ventilgehäuse (18),
wobei das Lufttrocknergehäuse (14) und das Ventilgehäuse (18) miteinander verbunden sind,
**dadurch gekennzeichnet, dass** das Lufttrocknergehäuse (14) ein vorstehendes Element (48) aufweist, welches das Ventilgehäuse (18) zumindest an einer Seite zumindest teilweise übergreift.

2. Luftaufbereitungseinrichtung nach Anspruch 1, wobei ferner eine Trocknerpatrone (20) an einer oberen Seite des Lufttrocknergehäuses (14) angebracht oder anbringbar ist.

3. Luftaufbereitungseinrichtung nach Anspruch 1 oder 2, wobei eine Trocknerpatrone (20) zumindest teilweise an dem vorstehenden Element (48) des Lufttrocknergehäuses (14) angebracht oder anbringbar ist.

4. Luftaufbereitungseinrichtung nach einem der Ansprüche 1 bis 3, wobei das Lufttrocknergehäuse (14) auf einer dem Ventilgehäuse (12) zugewandten Verbindungsseite eine Aufnahme aufweist, die zumindest einen Teil des Ventilgehäuses (14) aufnimmt.

5. Luftaufbereitungseinrichtung nach einem der Ansprüche 1 bis 4, wobei das Lufttrocknergehäuse (14) auf einer dem Ventilgehäuse (18) zugewandten Verbindungsseite stufenartig ausgebildet ist.

6. Luftaufbereitungseinrichtung nach einem der Ansprüche 4 oder 5, wobei das Ventilgehäuse (18) auf einer dem Lufttrocknergehäuse (14) zugewandten Seite zu der Verbindungsseite komplementär ausgebildet ist.

7. Luftaufbereitungseinrichtung nach einem der Ansprüche 1 bis 6, wobei das Ventilgehäuse (18) und das Lufttrocknergehäuse (14) über eine Luftführungseinrichtung miteinander verbunden sind, die es Luft erlaubt, zwischen Lufttrockner (12) und Mehrkreisschutzventil (16) zu strömen.

8. Luftaufbereitungseinrichtung nach Anspruch 6, wobei die Luftführungseinrichtung im Wesentlichen vollständig von Ventilgehäuse (18) und Lufttrocknergehäuse (14) umgeben ist.

9. Luftaufbereitungseinrichtung nach einem der Ansprüche 1 bis 8, wobei das Ventilgehäuse (18) und das Lufttrocknergehäuse (14) miteinander verschraubt sind.

10. Luftaufbereitungseinrichtung nach einem der Ansprüche 1 bis 9, wobei das Ventilgehäuse (18) das Lufttrocknergehäuse (14) in mindestens einer Richtung überragt.

11. Luftaufbereitungseinrichtung nach Anspruch 10, wobei das Ventilgehäuse (18) das Lufttrocknergehäuse (14) zur Unterseite des Lufttrockners (12) hin überragt.

12. Luftaufbereitungseinrichtung nach einem der Ansprüche 1 bis 11, wobei eine Schalldämpfereinrichtung (22) vorgesehen ist.

13. Luftaufbereitungseinrichtung nach einem der Ansprüche 1 bis 12, wobei das Mehrkreisschutzventil (16) mehrere Druckluftanschlüsse (60) für Druckluftkreise eines Fahrzeugs aufweist, die in eine gemeinsame Richtung ausgerichtet sind.

14. Luftaufbereitungseinrichtung nach einem der Anspruch 13, wobei die Druckluftanschlüsse (60) des Mehrkreisschutzventils (16) für die Druckluftkreise in eine Richtung ausgerichtet sind, die vom Fahrzeug wegzeigt.

15. Luftaufbereitungseinrichtung nach einem der Ansprüche 13 oder 14, wobei der Lufttrockner (12) mehrere Druckluftanschlüsse (32, 34, 36, 38) aufweist, die in die gleiche Richtung ausgerichtet sind wie die Druckluftanschlüsse (60) für Druckluftkreise des Mehrkreisschutzventils (16).

16. Fahrzeug mit einer Luftaufbereitungseinrichtung (10) nach einem der Ansprüche 1 bis 15.

## Claims

1. Air preparation device (10) for a vehicle, having:
an air dryer (12) with an air dryer housing (14),
a multi-circuit protection valve (16) with a valve housing (18),
wherein the air dryer housing (14) and the valve housing (18) are connected to each other, **characterised in that** the air dryer housing (14) has a protruding element (48) which engages at least partially over the valve housing (18) at least at one point.

2. Air preparation device according to claim 1, wherein furthermore a dryer cartridge (20) is arranged or can be arranged on an upper side of the air dryer housing (14).

3. Air preparation device according to claim 1 or 2, wherein a dryer cartridge (20) is arranged or can be arranged at least in part on the protruding element (48) of the air dryer housing (14).

4. Air preparation device according to one of claims 1 to 3, wherein the air dryer housing (14) has a receiving area on a connecting side facing towards the valve housing (12), the receiving area receiving at least a part of the valve housing (14).

5. Air preparation device according to one of claims 1 to 4, wherein the air dryer housing (14) is formed in a stepped manner on a connecting side facing towards the valve housing (18).

6. Air preparation device according to one of claims 4 or 5, wherein the valve housing (18) is formed in a complementary manner to the connecting side on a side facing towards the air dryer housing (14).

7. Air preparation device according to one of claims 1 to 6, wherein the valve housing (18) and the air dryer housing (14) are interconnected via an air guiding device which allows air to flow between the air dryer (12) and the multi-circuit protection valve (16).

8. Air preparation device according to claim 6, wherein the air guiding device is substantially completely enclosed by the valve housing (18) and air dryer housing (14).

9. Air preparation device according to one of claims 1 to 8, wherein the valve housing (18) and the air dryer housing (14) are screwed to each other.

10. Air preparation device according to one of claims 1 to 9, wherein the valve housing (18) projects over the air dryer housing (14) in at least one direction.

11. Air preparation device according to claim 10, wherein the valve housing (18) projects over the air dryer housing (14) towards the lower side of the air dryer (12).

12. Air preparation device according to one of claims 1 to 11, wherein a noise damping means (22) is provided.

13. Air preparation device according to one of claims 1 to 12, wherein the multi-circuit protection valve (16) has a plurality of compressed air supplies (60) for compressed air circuits of a vehicle which are orientated in a common direction.

14. Air preparation device according to one of claim 13, wherein the compressed air supplies (60) of the multi-circuit protection valve (16) for the compressed air circuits are orientated in a direction pointing away from the vehicle.

15. Air preparation device according to one of claims 13 or 14, wherein the air dryer (12) has a plurality of compressed air supplies (32, 34, 36, 38) which are orientated in the same direction as the compressed air supplies (60) for compressed air circuits of the multi-circuit protection valve (16).

16. Vehicle with an air preparation device (10) according to one of claims 1 to 15.

## Revendications

1. Dispositif (10) de traitement de l'air pour un véhicule, comprenant :
un déshydrateur (12) d'air ayant un corps (14) de déshydrateur d'air,
une soupape (16) de protection à plusieurs circuits ayant un corps (18) de soupape,
le corps (14) du déshydrateur d'air et le corps (18) de la soupape étant reliés entre eux,
**caractérisé en ce que** le corps (14) du déshydrateur d'air a un élément (48) en saillie, qui recouvre, au moins en partie, le corps (18) de la soupape au moins d'un côté.

2. Dispositif de traitement de l'air suivant la revendication 1, dans lequel, en outre, une cartouche (20) de déshydrateur est montée sur un côté supérieur du corps (14) du déshydrateur d'air ou peut l'être.

3. Dispositif de traitement de l'air suivant la revendication 1 ou 2, dans lequel une cartouche (20) de déshydrateur est montée, au moins en partie, sur l'élément (48) en saillie du corps (14) du déshydrateur d'air ou peut l'être.

4. Dispositif de traitement de l'air suivant l'une des revendications 1 à 3, dans lequel le corps (14) du déshydrateur d'air a, d'un côté de liaison tourné vers le corps (18) de la soupape, un logement, qui reçoit au moins une partie du corps (14) de la soupape.

5. Dispositif de traitement de l'air suivant l'une des revendications 1 à 4, dans lequel le corps (14) du déshydrateur d'air est constitué en palier d'un côté de liaison tourné vers le corps (18) de la soupape.

6. Dispositif de traitement de l'air suivant l'une des revendications 4 ou 5, dans lequel le corps (18) de la soupape est, d'un côté tourné vers le corps (14) du déshydrateur d'air, constitué de manière complémentaire du côté de liaison.

7. Dispositif de traitement de l'air suivant l'une des revendications 1 à 6, dans lequel le corps (18) de la soupape et le corps (14) du déshydrateur d'air sont reliés entre eux par un dispositif de conduite de l'air, qui permet à de l'air de s'écouler entre le déshydrateur (12) d'air et la soupape (16) de protection à plusieurs circuits.

8. Dispositif de traitement de l'air suivant la revendication 6, dans lequel le dispositif de conduite de l'air est entouré, sensiblement complètement, du corps (18) de la soupape et du corps (14) du déshydrateur d'air.

9. Dispositif de traitement de l'air suivant l'une des revendications 1 à 8, dans lequel le corps (18) de la soupape et le corps (14) du déshydrateur d'air sont vissés l'un à l'autre.

10. Dispositif de traitement de l'air suivant l'une des revendications 1 à 9, dans lequel le corps (18) de la soupape dépasse du corps (14) du déshydrateur, au moins dans une direction.

11. Dispositif de traitement de l'air suivant la revendication 10, dans lequel le corps (18) de la soupape dépasse du corps (14) du déshydrateur d'air du côté inférieur du déshydrateur (12) d'air.

12. Dispositif de traitement de l'air suivant l'une des revendications 1 à 11, dans lequel il est prévu un dispositif (22) d'atténuation du son.

13. Dispositif de traitement de l'air suivant l'une des revendications 1 à 12, dans lequel la soupape (16) de protection à plusieurs circuits a plusieurs raccords (60) pour des circuits d'air comprimé d'un véhicule, qui sont dirigés dans une direction commune.

14. Dispositif de traitement de l'air suivant la revendication 13, dans lequel les raccords (60) pour de l'air comprimé de la soupape (16) de protection à plusieurs circuits pour les circuits d'air comprimé sont dirigés dans une direction, qui s'éloigne du véhicule.

15. Dispositif de traitement de l'air suivant l'une des revendications 13 ou 14, dans lequel le déshydrateur (12) d'air a plusieurs raccords (32, 34, 36, 38) pour de l'air comprimé, qui sont dirigés dans la même direction que les raccords (60) pour de l'air comprimé pour des circuits d'air comprimé de la soupape (16) de protection à plusieurs circuits.

16. Véhicule ayant un dispositif (10) de traitement de l'air suivant l'une des revendications 1 à 15.
